# EUROPEAN PATENT APPLICATION

(11) **EP 3 272 228 A1**
(43) Date of publication of application: **24.01.2018**
(21) Application number: 16001611.9
(22) Date of filing: 22.07.2016
(51) Int. Cl.: A23L 2/38, A23L 2/84, A23C 11/10, A23L 19/00, A23L 25/00

(54) **PROCESS FOR PREPARING A NEW NON-DAIRY BEVERAGE FOOD WITH POTENTIAL FUNCTIONAL PROPERTIES**

(71) Applicant: Liquats Vegetals SA, Girona (ES)
(72) Inventor: Erra Serrabasa, Josep M., 17430 Santa Coloma de Famers (Girona) (ES); Soler Codina, Montserrat, 08560 Manlleu (Barcelona) (ES); Bernat Pérez, Neus, 46022 València (ES); Padilla Luque, Jessica, 08030 Barcelona (Barcelona) (ES); Gol Karsunke, Oriol, 17406 Viladrau (Girona) (ES)
(74) Representative: Juncosa Miro, Jaime

(57) **Abstract**

A non-dairy, vegetable based beverage is obtained from acorns by a process which is characterized in that it comprises the steps of:
a) grinding a mixture of acorn nuts and water, optionally comprising enzymes to reduce the amount of starch,
b) heating the ground mixture to provide starch swelling and subsequent cooling the heated mixture to a temperature below 65°C,
c) optionally adding enzymes to the mixture of step b) to reduce the amount of starch in said mixture,
d) fine grinding the watery mixture,
d1) homogenizing the mixture.

Preferably the process includes a step for removing tannins, wherein said tannin removal step preferably involves at least one of heating the mixture of ground acorn or applying vacuum to said mixture.

## Description

### Field of the invention

The present invention relates to a process for preparing a non-dairy liquid food product that has a high content of fatty acids with healthy profiles and antioxidant nutrients and to a liquid food product obtained through the above mentioned process. In particular, the invention relates to a beverage food rich in oleic (ω9), followed by linoleic (ω6) acids and a good source of antioxidants (polyphenols).

The invention provides a drinkable ready-to consume foodstuff by using acorns as a base product and/or by the incorporation of acorn derivatives, i.e. compounds that are naturally present in acorns.

### Background of the invention

On the one hand, consumers are increasingly aware of the relationship between nutrition and health. Their pattern, hence, is aimed at demanding healthy food products such as vegetable beverages (known as vegetable "milks"). Indeed, many of the purchasers choose these beverages for health concerns including lactose intolerance, animal-protein allergies or cholesterol intake.

On the other hand, it is widely recognized that diets should contain a sufficient amount of omega fatty acids, such as oleic and linoleic acids since, besides their contribution to maintain blood lipid profiles into health levels, they are seen to protect us from cardiovascular diseases (as disclosed: EFSA (2011) *[*EFSA Journal, 9(4):2043], Farvid et al. (2014) [Circulation, 130(18):1568-78], Karacor & Cam (2015) [Medical Science and Discovery, 2(1): 125-32]). Nuts and nut-based products (i.e. nut "milks") are a good source of these healthy compounds, since they provide an equilibrated monounsaturated - polyunsaturated fatty acids ratio (Kris-Etherton et al. (2008) [The Journal of Nutrition, 138(9):1746S-1751S]).

Patent ES2040654A1 relates to a method for the preparation of nut "milks", particularly almond or coconut "milk" in powder to be used in milk shake processing. Processing includes grinding nuts to obtain a powder and then dispersing them in water by using colloid mills; in this last step sweeteners are added. The watery emulsion is homogenized, evaporated, dried and sprayed. The resultant powder is formulated by adding both stabilizers and emulsifiers before being used as base product to obtain food shakes.

Patent ES2095806A1 relates to a beverage based on almonds and to a method for the preparation of the aforementioned beverage, ready to consume, with water activity greater than 0.75 and a long preservation period. The beverage is stabilized by adding emulsifiers and, furthermore, sweetened.

Patent US5656321A relates to a process for preparing almond milk, as well as to products obtained thereby. The process of the invention includes the following steps: heating and grinding together an aqueous dispersion that consists of partially de-oiled almond powder with a stabilizing hydrocolloid, decanting by centrifugation to remove non-soluble particles, a UHT-sterilization treatment, a homogenization during cooling and, finally, aseptic packaging of the product obtained.

Other disclosures of beverages based on ground nuts mixed with water and other components can be found in documents CN-A-1559304, CN-A-1209303 and CN-A-1063207. Processing described in these patents does not include centrifugation to remove non-soluble particles. Document CN-A-1370402 describes a beverage based on crushed walnuts, emulsifiers, stabilizers, antioxidants, sweeteners, aromas and preservatives and the processing to obtain the beverage described.

All the above mentioned processes to produce nut "milks" turn to use several types of additives to both to stabilize physically and improve the taste of the final product. There is however the need to provide an alternative to the state of the art products and processes by means of both novel base products and novel processing that are cost-efficient and time saving, in which the use of additives (i.e. stabilizers and emulsifiers) is not required. Moreover, the final result has to be a stable and palatable product with excellent nutritional properties.

The above mentioned problem is solved by the present invention, which provides a novel nut-based beverage by using acorns as a base product. The final product is a beverage entirely based on acorns or a beverage containing acorns and other products, such as other nuts. It was found that it is possible to obtain a stable beverage based on acorns, i.e. a beverage made with 100% acorn or a beverage containing acorn and other nuts or cereals, without making use of stabilizers and/or emulsifiers.

A further advantage of the invention is that the lipid profile of acorns is rich in oleic (60% of the dry matter) and linoleic (17% of the dry matter) acids and contains relevant amounts of tannins, which are phenolic compounds with antioxidant properties. In this sense, the acorn beverage would provide the health properties of a non-dairy "milk" with a high content of omega fatty acids and relevant contents of antioxidants; this "milk" would be particularly suitable for sensitive groups of population such as, among others, those who are intolerant to gluten or lactose, those allergic to cow-milk proteins, etcetra. The invention also provides a method for preparing a drinkable food, i.e. a beverage based on acorn nuts.

With the term "acorn derivatives" it is here identified a product that is obtained after treating acorns with the method according to the present invention. As explained in greater detail hereinafter, the acorn derivative preferably is an acorn beverage; the acorn beverage of the invention may contain a reduced amount of the starch initially present in the acorn, in general, the remaining amount of initial starch is less than 7% by weight of the final beverage; preferably less than 3% by weight, even more preferably a content of starch that is 0.5% by weight or less.

Another acorn derivative is the product obtainable by a process according to the invention in which the amount of starch is not reduced by treatment with enzymes or it is reduced only in part. Typically, the product according to this embodiment of the invention is a thick, pasty product that could be used as such or could be added to other beverages and food products. A further advantage of the invention is that by means of the invention's process a part of the tannins initially present in the acorn are removed. It appears that the process of the invention results in the removal of the most bitter tannins; actually, the amount of tannins remaining in the final product is sufficiently high to impart the product good to excellent antioxidant properties.

### Summary of the invention

Accordingly, the present invention relates to a method for obtaining an acorn-based food product with excellent sensory and nutritional properties from the following two ingredients: acorn and water. Moreover, it is aimed at providing a new alternative to known vegetable drinks and to animal milks that can be used either directly or as a cooking ingredient in the same manner that milk is generally used.

The method comprises the steps of:
a) grinding a mixture of acorn nuts and water, optionally comprising enzymes to reduce the amount of starch
b) heating the ground mixture to a temperature within the range of 65°C to 95°C and subsequent cooling
c) adding enzymes to the mixture, if required (optional treatment)
d) fine grinding of the watery mixture
d1) homogenizing the mixture
e) separating solids after step d1) if the amount of solids is higher than 3% (by weight) within the matrix.

As above mentioned, the use of enzymes in steps a) and in step c) is not mandatory; enzymes are used to break the starch molecules in order to obtain a liquid final product that is suitable for use as a beverage (possibly after standardizing step g).

The invention is further disclosed in greater details with reference the following non-limiting drawings, in which:
- Figure 1, shows the flow chart of a possible non-limiting, embodiment of the invention, and
- Figure 2 shows part of the flow chart of a possible, non-limiting, additional embodiment of the invention.

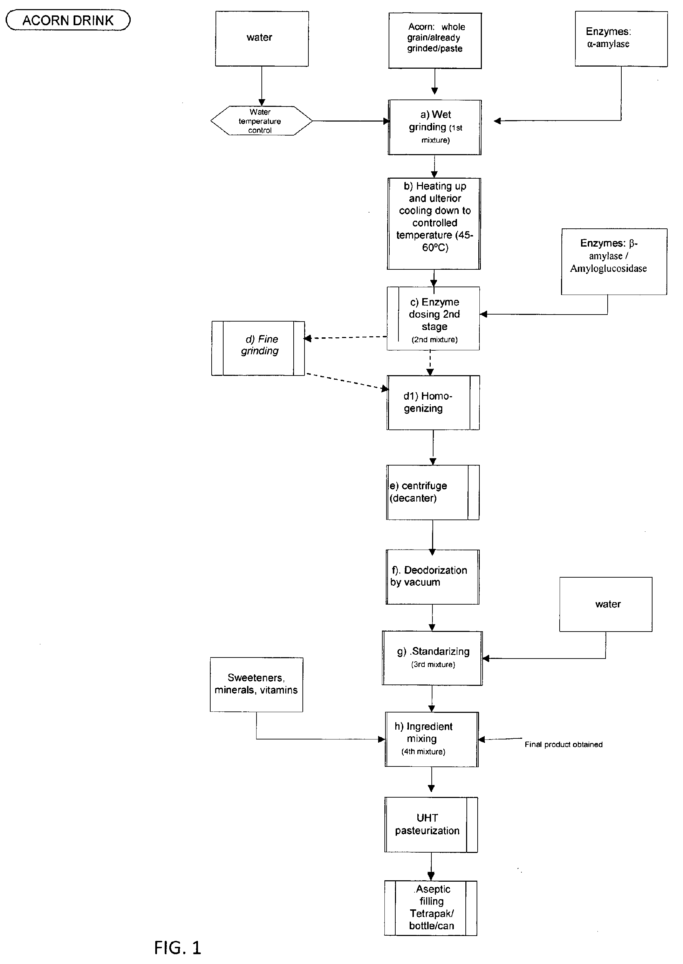

With reference to fig.1, the starting ingredients for the process are acorns and water. Acorns suitable to be used in the present invention are oak acorns from all the genus *Quercus,* although acorns derived from holm oak (*Quercus ilex*) is preferred. Acorns, as dry or fresh nuts, can be whole, deshelled or already ground, either as a flour or paste. Preferred starting product is deshelled and peeled acorn. Once harvested, acorns are generally treated and conditioned for storage. Prior to the storage, nuts are firstly deshelled and, optionally, peeled. These nuts can be then stored in any of the following conditions:
- Whole nut dried, cut in pieces or not.
- Whole nut frozen, cut in pieces or not.
- Whole nut in controlled temperature (fridge).
- Whole nut in a solution of 2%-20% NaCl in water
- Whole nut heat treated by either direct flame, microwaves/radio frequency waves, or steam.

**Step a)** comprises the wet grinding of pre-conditioned acorns either with or without the presence of enzymes to reduce the amount of original starch in the acorns by converting the starch into polysaccharides. According to possible embodiments of the invention, a partial conversion of the starch is carried out in order to have a final product that contains a substantial amount of the initial starch, i.e. an amount of starch that is higher than 20% by weight on the weight of the final product, preferably at least 35% by weight, more preferably at least 50% by weight. Known products made of acorn starch, such as "dotorimuk", are obtained by processes that result in the removal of tannins and fats from the product; contrary to this, the products of the invention contain a portion of the initial tannins and at least a portion of the initial acorn's fats.
   The use of starch-reducing enzymes is a preferred feature of the invention, in particular when the final product of the process is intended to be a beverage. Suitable enzymes to be used in step a) are those that reduce starch to sugars and that are heat resistant; exemplary enzymes are amylases, preferably α-amylase, which are the most suitable for achieving the aim sought in this process step.
   The referred wet grinding is preferably carried out with heated water, although cold water can be also used; the temperature of the water used in step a) is preferably above 40°C and up to 98°C, preferably in the range 75-85°C. A purpose of using hot water is to eliminate any endogenous lipoxygenase possibly present in order to prevent lipid oxidations; another purpose is to reduce part of the tannins by their volatilization. In fact, an important feature of the invention is to control the level of tannins in order to provide a proper balance between antioxidant properties and negative sensory perceptions to the final drink. Acorn nuts used in step a) are deshelled, preferably peeled and can be fresh nuts or dry nuts. A soaking process is not required if the acorns are ground and crushed directly into the hot water (wet grinding).
Step b) comprises heating the slurry resultant from step a) to a preferred temperature of 70-90°C and then cooling down to 40-70°C, preferably 50-60°C (Fig 1). By heating the slurry, the starch hydration and its subsequent swelling is completed; thus, in further steps, enzymes can further act to reduce the swollen starch chains into mono-, di- and tri-oligosaccharides. In the process of the invention aimed at producing a beverage, the mixture is ground and heated until the majority of the starch (at least 80% of the initial starch content, being 90% as optimal) is transformed into sugars, such as maltose, fructose, glucose, sucrose, and/or maltotriose.

According to a possible embodiment of the invention, once step b) is completed, an addition of other enzymes to modify the content of starch may be carried out (step c). Enzymes used in this step are selected in view of the type and amount of sugars required and/or defined in the final targeted product from the treated mixture of ground acorns. Suitable enzymes to be used in step c) may be amyloglucosidase if glucose is to be obtained in major quantities or β-amylases if maltose is to be obtained as major sugar.

The following step d) provides for a wet fine grinding of the mixture. Fine grinding may be carried out according to any known fine grinding process with known grinding systems. Step d) may result in lowering the particle dimensions of the initial material to about 10 - 100 micron. Wet fine grinding is facilitated by having carried out step b), i.e. the starch swelling step, and step c), i.e. the starch treatment with enzymes.

The process includes a further step of homogenizing the wet mixture; emulsion stabilization of the mixture obtained from previous steps is carried out by using a homogenizer; preferably, the step provides for applying pressures in the range of 150-450 bar. Suitable processing temperatures during homogenization are in the range of 20-95 °C. This step may be a continuation of the grinding process in order to reduce particle sizes to optimal values, especially with regards to fat globules. Acorn was found to have relevant amount of fats and it was found that by introducing a homogenization treatment into the processing the stability of the oil-in-water emulsions is improved. According to an embodiment of the invention's process, the grinding step (step d) is carried out by means of the homogenization step; in other words, steps d) and d1) are carried out simultaneously by means of the homogenization step. Other grinding systems can be used; nevertheless, alternative processes should be preferably followed by a homogenization, due to the nature of acorns.

In step e) the final ground matrix may then be treated to separate non-soluble particles, if required. In general, a separation step is carried out if the amount of solids is higher than 3% (w/w). Suitable equipment to carry out the separation can be either a decanter or a centrifuge. Preferably, decanting or centrifugation step e) is carried out at a temperature of 60°C-75°C.

As previously mentioned, content of tannins in an acorn-based product may be controlled to avoid excessive bitterness of the final product; this is especially relevant when different types of acorn nuts having different contents of tannins are used in the preparation of the product.

In order to control the content of tannins in the ground slurry, **step f)** consists in a removal of some of the tannins, preferably in the step of applying vacuum to the mixture obtained through the previous steps; typically, step f) includes treating the emulsion obtained from step e) under negative pressure to remove excessive tannins and reduce or eliminate the astringent sensation caused by tannins. Vacuum treatment is preferably carried out under pressures 0.4 - 0.8 bar, for 2 - 10 minutes and at relatively high temperatures (60-80 °C).

It was found that by this treatment at reduced pressure it is possible to remove the most bitter tannins without having to carry out the known, long lasting leaching treatments in cold water known in the art and previously used to this purpose.

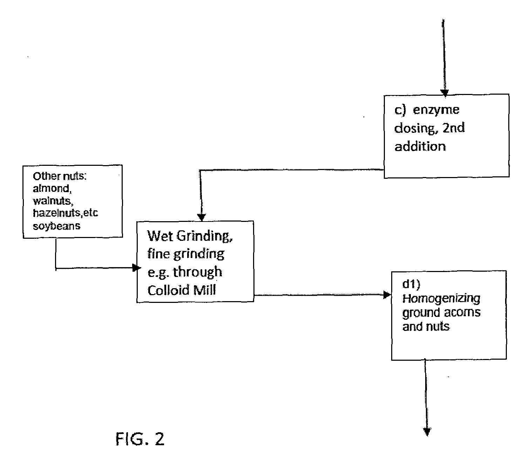

The product of the invention may contain other types of either nuts or grains to obtain a mixed drink. Suitable nuts are walnuts, almonds and/or hazelnuts, among others; soya and cereals may also be added, although walnuts and almonds are the preferred added materials. In an embodiment shown in Figure 2, the added nuts are ground in a fine grinding system, such as a colloid mill, installed in the circuit between step c) and step d), using the mixture of ground acorns, treated with enzymes, obtained at step c) as carrier. The ground mixture may be fed directly to the homogenization step d1) as visible in the flow chart of Fig.2.

This step is very useful, because it allows to adjust the concentration of other nuts to be added to said liquid fluid obtained in step c), and saves energy since only one step of separation is needed. In a different embodiment, the added nuts may be in the form of either a paste or a powder and fed to fine grinding step d) as such. In another different embodiment, the added nuts are ground with water in a separate grinding system and then fed to the fine grinding (step d) (Fig.1) without having to go through the enzyme treatment.

Homogenization and separation processes done in step e) should be carried out once the added ingredients are integrated in the acorn-matrix.

The amount of acorns over the total amount of nuts (including acorns and all other nuts) is 50-100 %, preferably 70-90 % of the total content of nuts, on a dry basis. The ratio of acorns and possibly other nuts (total nut content) to water is 3 to 20% by weight of nuts (including acorns) and 97%-80% by weight of water. The mixture obtained from steps a) to c) is in the form of a fluid paste and, then, is finely ground in step d), preferably homogenized, and generally submitted to a separation step in which a liquid part is separated from the paste obtained at step d), to be used in the final beverage (Fig. 1). Optionally, the beverage can be enriched with additives such as vitamins, calcium or other minerals, energizing or stimulating ingredients, or mixtures thereof.

It is an aspect of the invention that the acorn beverage does not require the use of emulsifiers; it is therefore an object of this invention an acorn-based beverage free from emulsifiers and stabilizers, as well as other food additives (sweeteners, flavorings, among others). However, depending on the amount of additives that are added to the fluid product, it may be necessary to further include stabilizers in the final beverage to compensate the added solids.

In addition to nuts, or instead of nuts, soya and cereals may be present in the composition, together with acorns, to provide an acorn-based beverage. With the term acorn-based beverage it is defined a beverage in which the amount by weight of acorn in the starting composition is at least 50-55 % of the total amount of dry ingredient material used, i.e. of the total amount consisting of acorns and one or more ingredients such as grains and nuts. Suitable grains are soya beans and cereals, such as barley and oats. If soya and/or cereal grains are present, they are preferably wet ground according to step a) together with the acorns and are, hence, treated with enzymes in steps a) and c) to reduce the amount of total starch. Suitable nuts are, in addition to acorns, edible nuts such as Walnut, Hazelnut, Chestnut and other nuts such as Almond, Brazil nut, Cashew, Gevuina, Macadamia, Malabar chestnut, Pecan, Peanut, Pine nut, Pistachio, Yeheb nut.

The amounts of starting dry materials may be in the following ranges (parts by weight on the total amount of acorns and other nuts and grains).
- Acorns: 20 - 100 %
- Other nuts: 0- 50 % , preferably 20-30 %,
- Cereals (de-hulled): 0- 40 % , preferably 20-30 %,
- Soya: 0- 40 %, preferably 10-20 %,

In case only acorns and nuts are used, without cereals or soya beans, the minimum amount of acorns is preferably 50% by weight.

The emulsion released from step f) is then standardized in step g). The purpose of standardizing, as the word indicates, is to provide to the final product the physicochemical composition required, in terms of density, pH, dry matter content, fat content and/or brix degree (concentration in sugars). To that end, the above mentioned parameters in beverages have to be quantified and, once results are obtained, water may be added until the required concentrations are reached.

In step h) the final product is obtained. In this step different ingredients such as calcium salts or other minerals, sugars, sweeteners, vitamins, soluble cereals, flavors; as mentioned, stabilizers may have to be added to the beverage in case the amount of added solids is such that sedimentation would occur notwithstanding the self-stabilizing properties of the acorn beverage.

More specifically, the liquid product is a water composition comprising acorn protein and fats dispersed in the form of an emulsion. Exemplary amounts of additional ingredients with respect to final product are: calcium salts or other minerals and vitamins in a ratio of up to 0.5% of the total dry matter content; soluble cereals, sugars, sweeteners, coffee, cocoa derivatives or a combination thereof comprising 0.1-15% of the total weight of dry matter.

The standardized product is afterwards pasteurized, preferably by UHT, and aseptically filled into the final package, e.g. Tetra Pack^{®} containers, bottles, cans.

Other features and advantages of the invention will be discussed in the examples that are detailed below by way of a non-limiting explanation.

### Example 1. Preparation of 100% acorn beverage.

*The flow chart of this preparation is shown in* *fig.1**. In the preparation, whole acorns are de-hulled and wet ground in water at a temperature of 60-85 °C. The resulting hot fluid paste is treated at the cited temperature to perform the reduction of the starch to shorter chain sugars for 30-90 minutes with the addition of enzymes with α amylase activity The resulting mixture is cooled to 45-60°C; to the cooled mixture are added enzymes with β-amylase and amyloglucosidase activity.*

*The ground mixture, i.e. the second mixture, is finely ground and homogenized at a temperature of 80-90 °C and at a pressure of 200-250 bar. Following this step the paste is centrifuged (if required, i.e. if the content of solids is higher than about 3%), the liquid portion containing emulsified fats and soluble protein is separated, fed to a mixer where it is submitted to vacuum pressure, at 0.4-0.6 bars for 5-10 min to remove part of the tannins (step f*), *and then cooled.*

*Once the emulsion is returned to ambient pressure, water is added to standardize the final product. This mixture is then filtered and treated for final packaging, in which UHT treatment is included.*

*The final product has an excellent taste and there is no or very limited sedimentation of the components of the acorn in the final package. In exemplary embodiments the following amounts are used:*
*30 to 60 kg of acorns with 900 to 930 liters of water in the first step.*

*Additional water may be added at the end to standardize the product before UHT treatment; typically 10 to 70 liters of water are required for a composition where 30 to 60 kg of acorns are treated with 900 to 930 liters of water in the first step.*

### Example 2. Preparation of an acorn and walnut beverage.

*The flow chart of this preparation is shown in* *fig.1**. In the preparation, 35 kg of whole or deshelled acorns are ground in 930 liters of water at a temperature of 60-85* °*C*, *as in Example 1. The mixture obtained from step c) is fed to a wet grinding apparatus, a colloid mill. To the colloid mill 30 kg of walnuts are added and ground with the mixture of step c).*

*The paste is finely ground and fed to an homogenizer to be homogenized in step d) at a temperature of 20-95 °C, preferably in the range of 80-90* °*C and at a pressure of 150-450 bar. Following this step, the resulting emulsion is centrifuged, so that the liquid portion containing emulsified fats and soluble protein is separated; the separated portion is fed to a mixer where it is put under reduced pressure at 0.4-0.6 bars for 5-10 min to remove part of the tannins (step f) and cooled down.*

*Once the emulsion is returned to ambient pressure, minerals, vitamins and similar additional ingredients are added. If necessary, water is added to reach the required fluidity of the product. This mixed liquid is then treated for final packaging, in which filtering and UHT treatment are included. The final product has an excellent taste and there is no or very limited sedimentation of the components in the final product.*

According to other possible embodiments of the invention, walnuts are wet ground separately (20-50 kg of walnuts and 900-930 L of water) and added to the ground acorns at step d).

A person skilled in the art might introduce changes and modifications in the described embodiments without departing from the scope of the invention as it is defined in the attached claims.

## Claims

1. A process to obtain a non-dairy, vegetable based, liquid food product, which is **characterized in that** it comprises the steps of:
a) grinding a mixture of acorn nuts and water, optionally comprising enzymes to reduce the amount of starch,
b) heating the ground mixture to provide starch swelling and subsequent cooling the heated mixture to a temperature below 65°C,
c) optionally adding enzymes to the mixture of step b) to reduce the amount of starch in said mixture,
d) fine grinding the watery mixture,
d1) homogenizing the mixture.

2. A process according to claim 1, **characterized in that** in said step b) said mixture is heated to a temperature in the range of 75-95 °C and cooled to a temperature in the range of 45 to 65 °C.

3. A process according to claim 1 or 2, wherein said steps d) and d1) are carried out together and said acorns are finely ground by homogenization.

4. A process according to claim 3, wherein said homogenization is carried out at a pressure in the range of 150-450 bar, and at a temperature in the range of 20-95 °C.

5. A process according to any previous claim, further comprising a step (a, f) of removing tannins from the said mixture.

6. A method according to claim 5, wherein said tannin removal step involves at least one of heating the mixture of ground acorn or applying vacuum to said mixture.

7. A method according to claim 6, wherein said heating step is included in step a) or b).

8. A method according to claim 6 or 7, wherein said step (f) of applying a negative pressure to said mixture containing ground acorns is carried out after said homogenization step (d1).

9. A method according to any previous claim, further comprising a step (e) of centrifugation, said step being carried out after said homogenization step (d1).

10. A method according to any previous claim, further comprising at least a further step selected from standardizing (g) the mixture obtained from steps f) or e) and adding to the solution at least one additional ingredient from the group consisting of calcium or other mineral salts, sugars, sweeteners, vitamins, soluble cereals, coffee, emulsifiers and stabilizers, or a combination thereof, in a range of 0 to 5.0% of the total weight of the final composition.

11. A method according to any previous claim, wherein between steps c) and d1), nuts different from acorns are ground using the mixture obtained at step c) as fluid base, said other nuts are added preferably as whole or previously dry milled nuts, and wherein the resulting mixture of ground nuts and ground and treated acorns, undergoes all subsequent steps (d1 - h) of the process.

12. A method according to any previous claim wherein soya and/or cereals are present in the mixture of step a).

13. A liquid food product as obtainable through a process according to any claim 1 to 12, **characterized in that** it comprises fats and proteins derived from acorns.

14. A liquid food product according to claim 13, wherein said food product contains 0.5% to 2.0% by weight of fats and is free from stabilizers and/or emulsifiers.

15. The liquid food product according to claim 13 or 14, that is a beverage and that is further comprising at least one additional ingredient from the group consisting of the following ingredients: calcium salts or other minerals and vitamins in a ratio of up to 10% of the total weight of dry matter of the final beverage composition.

16. A process of preparing a non-dairy milk beverage different from the liquid food product of claims 13 to 15, wherein a product as obtainable from any claim 1 to 12 is added to said non-dairy milk beverage to stabilize it.
